(19) **Europäisches Patentamt / European Patent Office / Office européen des brevets**

(11) **EP 4 289 270 A1**

(12) **EUROPEAN PATENT APPLICATION**
published in accordance with Art. 153(4) EPC

(43) Date of publication:
**13.12.2023 Bulletin 2023/50**

(21) Application number: **22749635.3**

(22) Date of filing: **28.01.2022**

(51) International Patent Classification (IPC):
**A01N 37/44** (2006.01)    **A01N 25/00** (2006.01)
**A01N 25/02** (2006.01)    **A01N 37/02** (2006.01)
**A01P 5/00** (2006.01)

(52) Cooperative Patent Classification (CPC):
**A01N 25/00; A01N 25/02; A01N 37/02;
A01N 37/44; A01P 5/00**

(86) International application number:
**PCT/JP2022/003410**

(87) International publication number:
**WO 2022/168763 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.02.2021  JP 2021015550**

(71) Applicants:
• **Citic Co., Ltd.**
  **Hidaka-gun, Hokkaido 056-0014 (JP)**
• **NATIONAL AGRICULTURE AND FOOD RESEARCH ORGANIZATION**
  **Tsukuba-shi, Ibaraki 305-8517 (JP)**

(72) Inventors:
• **TAKEBE Fumihiko**
  **Hidaka-gun, Hokkaido 056-0014 (JP)**
• **NAMIKATA Masahiro**
  **Hidaka-gun, Hokkaido 056-0014 (JP)**
• **NARABU Takashi**
  **Sapporo-shi, Hokkaido 062-8555 (JP)**
• **ITO Kenji**
  **Sapporo-shi, Hokkaido 062-8555 (JP)**

(74) Representative: **Gill Jennings & Every LLP**
**The Broadgate Tower**
**20 Primrose Street**
**London EC2A 2ES (GB)**

(54) **INACTIVATION AGENT AND INACTIVATION METHOD FOR INACTIVATING EGGS AND LARVA OF PHYTOPARASITIC CYST NEMATODES, AND AGRICULTURAL MATERIAL CONTAINING SAID INACTIVATION AGENT**

(57)    The present invention provides an inactivating agent containing an amino acid and/or an amino acid derivative that is capable of selectively inactivating specific forms in a biological life cycle of cyst nematodes, namely, eggs and second stage juveniles. The inactivating agent contains one or both of an amino acid and an amino acid derivative substance, or an aqueous solution thereof. The cyst nematodes on which the inactivating agent of the present invention has the effect is particularly at least one selected from the group consisting of potato cyst nematode, white potato cyst nematode, and soybean cyst nematode.

[Figure 4]

EP 4 289 270 A1

**Description**

Technical Field

The present invention relates to an agent and a method for controlling cyst nematodes that are parasitic on a plant to inhibit the growth thereof, and more specifically, it relates to an agent and a method for inactivating eggs and/or J2s (second stage juveniles) by directly or indirectly contacting an amino acid and/or a derivative substance thereof with eggs and/or J2s present in and out of a cyst of cyst nematodes.

Background Art

Cyst nematodes are one kind of pests causing a serious problem in cultivating potatoes such as Irish Cobbler and May Queen, soybeans and the like. It is known that since cyst nematodes form "cyst", that is, a durable form, in the life cycle, if the infestation is once caused, extermination is difficult.

As a countermeasure against a potato cyst nematode that is a kind of the cyst nematodes, cultivation of highly resistant varieties such as Kitaakari or Toya has conventionally been promoted, but resistant varieties against a white potato cyst nematode are not highly resistant, and thus usable varieties thereof are restricted. Besides, these resistant varieties have not been sufficiently spread. Irish Cobbler and May Queen, occupying 70% of varieties to be eaten raw, are varieties not resistant to the potato cyst nematode and a white potato cyst nematode. As a realistic countermeasure, although the effect is not perfect, an agrochemical is applied. An agrochemical is, however, toxic, and may harmfully affect human bodies and the environment, and may damage soil in some cases, and in addition, is expensive. Accordingly, there is a demand for a pest control material having a high effect of controlling these cyst nematodes, having a low risk of influence on the environment and human bodies, and having a low cost.

It is known that some amino acids have an effect of inhibiting crop damage caused by nematodes. Among these, methionine is a kind of amino acids existing in nature, and is a highly safe substance used in a pharmaceutical, a supplement, feedstuff, and the like. Regarding nematode control using methionine, techniques described in Patent Literatures 1 to 3 have been proposed. None of these patent literatures discloses a mechanism of methionine of affecting nematodes (action mechanism). In the techniques proposed in Patent Literature 2 and Patent Literature 3, methionine and an amino acid are not singly applied but used together with another substance having been confirmed to have an nematode-killing effect, and it is disclosed that the worm-killing effect is not sufficiently obtained by using only methionine and an amino acid. Besides, as described also in Patent Literature 1, it is apprehended that crop growth may be inhibited when a large amount of methionine is applied. Furthermore, the effect on the other cyst nematodes is not disclosed although it is proved in Examples that the techniques proposed in these patent literatures have the effect on the root-knot nematode. Although Patent Literature 3 mentions the potato cyst nematode, only the root-knot nematode is described in Examples, and the effect on the other cyst nematodes is not disclosed again.

It has been little studied so far that nematodes can be controlled by singly applying an amino acid such as methionine to soil. Non Patent Literature 1 reports that single use of methionine has an effect of controlling sweet potato root-knot nematode, but the effect is unstable in a field test, and the effect is unclear for the cobb root-lesion nematode, and discloses neither the effect on the other cyst nematodes nor the action mechanism on the cyst nematodes.

The effect of single application of methionine on the potato cyst nematode is reported in Non Patent Literature 2. Besides, a specific experimental method and an evaluation method of Non Patent Literature 2 are described in Non Patent Literature 3 and Non Patent Literature 4. In Non Patent Literature 2, the number of cysts on the roots and change in the numbers of normal J2s and eggs are checked to examine the influence of methionine on cysts and J2s themselves of the potato cyst nematode. Specifically, an experiment was carried out as follows. First, a potato was planted on a pot filled with soil, and after 3 days (at a stage when roots have been grown), 5,000 J2s immediately after hatching were inoculated therein, and a methionine aqueous solution was added thereto. After 3 weeks, the potato was taken out of the pot, and transplanted in new zeolite soil, and the number of female adults or male adults generated from the roots of the potato was counted. This experiment is an experiment on the effect of methionine on the potato cyst nematode in a host. Besides, in this literature, a hatching experiment in which 50 cysts extracted from the zeolite soil were contacted with a root extract was also conducted. In addition, the present applicant proposes Patent Literature 4 regarding the effect of single application of methionine on the potato cyst nematode and the white potato cyst nematode. This technique reveals that when only methionine is applied to soil before planting a potato, the number of cysts adhering to the potato can be reduced even at a low dose.

Now, the life cycle of the cyst nematodes will be described. Cyst nematodes form "cyst" that has durable hard cuticle in the life cycle. The cyst is resistant to external (physical/chemical) environment as the main existence form in soil, and is known to survive in soil for 10 years or more. The eggs of cyst nematodes are hatched within the cyst when presence of hatching stimuli from host plants, and the J2s(second stage juveniles: juveniles that has hatched after moulting in the egg, and only J2s moves in soil to enter a plant root) emerge from the cyst. The J2 enters a host plant root as a result of activation outside the cyst, and becomes an adult through third stage and fourth stage juvenile (they are sedentary in the root), and when a female adult dies, the dead body ultimately becomes a cyst. The cyst nematode has such life cycle in soil.

As a characteristic activity of cyst nematodes in the life cycle, Non Patent Literature 5 discusses the timing of water uptake of a cyst nematode J2. According to Non Patent Literature 5, it has been found that the timing of positive water uptake of J2 in the life cycle includes (1) uptake involved in change of metabolic activity toward hatch in the egg, and (2) uptake for promoting hydration after the hatch, and that timing at which external environmental factors including water affect the inside of the body of the J2 includes (3) uptake caused in thrusting the stylet when the J2 breaks the eggshell at the time of hatch, and (4) uptake caused in thrusting the stylet when the J2 enters a plant root.

In consideration of the life cycle of the cyst nematodes, in Non Patent Literature 2, only the number of adults coming out of the plant after contacting methionine with J2s outside the plant is counted, and therefore, the action mechanism of methionine in the life cycle, namely, at which stage in the life cycle of the cyst nematodes (particularly, in a process from the hatch from an egg to become a J2 until parasitizing a plant) and how methionine acts to affect the cyst nematodes, is unknown. Besides, it is apprehended that the amount of methionine applied in Non Patent Literature 2 may inhibit crop growth.

Citation List

Patent Literature

Patent Literature 1: Japanese Patent Laid-Open No. 2000-7506
Patent Literature 2: Japanese Patent No. 3557454
Patent Literature 3: Japanese Patent No. 4670254
Patent Literature 4: International Publication No. WO2019/004252

Non Patent Literature

Non Patent Literature 1: Minagawa et al., "Soil Application Effect of Methionine on the Root-Knot and Soil Nematode Densities, and Tomato Nursery Growth", Bulletin of the National Agricultural Research Center, January 2004, No. 4, p. 35-40
Non Patent Literature 2: K. EVANS and D. L. TRUDGILL, "EFFECTS OF AN AMINO ACIDS ON THE REPRODUCTION OF HETERODERA ROSTOCHIENSIS", Nematologica, 1971, 17, p. 495-500
Non Patent Literature 3: D. L. TRUDGILL, "THE EFFECT OF ENVIRONMENT ON SEX DETERMINATION IN HETERODERA ROSTOCHIENSIS", Nematologica, 1967, 13, p. 263-272
Non Patent Literature 4: D. L. TRUDGILL, J. M. WEBSTER AND D. M. PARROTT, "THE EFFECT OF RESISTANT SOLANACEOUS PLANTS ON THE SEX RATIO OF HETERODERA ROSTOCHIENSIS AND THE USE OF THE SEX RATIO TO ASSESS THE FREQUENCY AND GENETIC CONSTITUTION OF PATHOTYPES", ANN. APPL. BIOL, 1967, 60, p. 421-428
Non Patent Literature 5: "Potato Cyst Nematodes: Biology, Distribution and Control" Edited by R. J. Marks and B. B. Brodie, 1998, p. 27-43

Summary of Invention

Technical Problem

An object of the present invention is to provide an inactivating agent containing an amino acid and/or an amino acid derivative substance that is capable of selectively inactivating specific forms of cyst nematodes in the life cycle, namely, eggs and J2s.

Solution to Problem

The present invention is characterized by selectively inactivating eggs and J2s by causing one or both of an amino acid and an amino acid derivative substance to be taken into the bodies through direct or indirect contact of the one or both of the amino acid and the amino acid derivative substance with the eggs and the J2s of cyst nematodes, or through direct or indirect contact of an aqueous solution of the one or both of the amino acid and the amino acid derivative substance with the eggs and the J2s within and out of cysts of the cyst nematodes.

The present inventors presume the action mechanism of the inactivating agent of the present invention for selectively inactivating eggs and J2s of cyst nematodes as follows:

Cyst nematodes have the life cycle in soil as described above. Specifically, a female adult of a cyst nematode dies with eggs holding therein to form a cyst, the eggs within the cyst hatch into J2s, the J2s emerge from the cyst and enter the host plant roots as a result of the activity, and become adults within the roots, and female adults form cysts again. According to Non Patent Literature 5, it is known that when the egg hatching response starts, eggs absorb water from the outside the eggshells, and next, J2s grow within the eggs, and the grown J2s thrust stylets for breaking the eggshells to hatch. At the time of such absorption of water into the eggshells and thrusting of the stylets, the J2s within the eggs take, together with water into the bodies, the inactivating agent containing one or both of the amino acid and the derivative substance thereof, or the aqueous solution thereof, and as a result, the J2s do not hatch but die within the eggs, or even when hatched, die immediately after. Besides, it is also known that the J2s thrust the stylets into roots in entering the plant roots, and therefore, even if the J2s have not taken the amino acid, the derivative substance thereof, or the like into the bodies in hatching, they take such a substance into the bodies in the action of needles in entering the roots, and as a result, the J2s probably die before entering the roots.

Herein, that eggs do not hatch, that even when J2s hatch, they die immediately after the hatch, that the J2s die before entering roots, and that the J2s die immediately after entering the roots are designated as "inactivation of eggs and J2s".

One aspect of the present invention provides an inactivating agent for inactivating eggs and J2s of cyst nematodes. The inactivating agent contains one or both of an amino acid and an amino acid derivative substance, or an aqueous solution thereof. The cyst nematodes on which the inactivating agent of the present invention has the effect are particularly at least one selected from the group consisting of potato cyst nematode, white potato cyst nematode, soybean cyst nematode.

The amino acid contained in the inactivating agent of the present invention is preferably at least one selected from the group consisting of methionine, 2-hydroxy-4-methylthiobutyric acid, ethionine, cystathionine, threonine, valine, and phenylalanine. Besides, the amino acid derivative substance contained in the inactivating agent of the present invention is preferably a substance having a butyric acid's carbon skeleton, more preferably a saturated fatty acid having a butyric acid's carbon skeleton, and further preferably at least one selected from the group consisting of 2-oxobutyric acid, 2-hydroxybutyric acid, 2-aminobutyric acid, keto acid, ketoglutaric acid, acetoacetic acid, butyric acid, isobutyric acid, valeric acid, and isovaleric acid. A concentration of one or both of the amino acid and the amino acid derivative substance contained in the inactivating agent of the present invention is preferably at least 5 ppm or more.

Another aspect of the present invention provides an inactivation agricultural material for inactivating eggs and J2s of cyst nematodes, containing the inactivating agent.

Still another aspect of the present invention provides an inactivation method for eggs and J2s, including a step of contacting the inactivating agent with eggs and/or J2s of cyst nematodes. In one embodiment, the step of contacting the inactivating agent with eggs and/or J2s of cyst nematodes preferably includes a step of contacting the inactivating agent with the eggs and/or J2s by causing the inactivating agent to be present in soil. In another embodiment, the step of contacting the inactivating agent with eggs and/or J2s of cyst nematodes preferably includes a step of causing a target plant to absorb the inactivating agent, and contacting a root of the target plant having absorbed the inactivating agent with the J2s.

Advantageous Effects of Invention

An inactivating agent of the present invention can selectively inactivate specific forms of cyst nematodes in the life cycle, namely, eggs and J2s. Accordingly, when the inactivating agent of the present invention is used, formation of cysts of cyst nematodes on a target plant can be effectively prevented with environmental load reduced.

Brief Description of Drawings

[Figure 1] Figure 1 illustrates results of a preliminary experiment for evaluating direct influence of methionine on J2s.
[Figure 2] Figure 2 illustrates data obtained in an experiment for evaluating an effect of inactivating eggs and J2s of methionine used as an inactivating agent of one embodiment of the present invention, and illustrates a J2 collection rate and a corrected inactivation rate of each sample.
[Figure 3] Figure 3 illustrates data obtained in an experiment for evaluating hatching response and an inactivation effect on hatched J2s in the presence of methionine that is an inactivating agent of one embodiment of the present invention, and illustrates a non-hatching rate and a J2 survival rate of each sample.

[Figure 4] Figure 4 illustrates data obtained in an experiment for evaluating an inactivation effect on eggs and J2s of a methionine derivative substance used as the inactivating agent of one embodiment of the present invention, and illustrates the numbers of eggs and J2s in each sample.

[Figure 5] Figure 5 illustrates data obtained in an experiment for evaluating an inactivation effect on eggs and J2s of a methionine derivative substance used as the inactivating agent of one embodiment of the present invention, and illustrates a corrected hatching inhibiting rate of each sample.

[Figure 6] Figure 6 illustrates data obtained in an experiment for evaluating an inactivation effect on eggs and J2s of a methionine derivative substance used as the inactivating agent of one embodiment of the present invention, and illustrates a corrected inactivation rate of each sample.

[Figure 7] Figure 7 illustrates data obtained in an experiment for evaluating an inactivation effect on eggs and J2s through indirect contact with methionine used as the inactivating agent of one embodiment of the present invention, and illustrates the number of cysts adhering to roots in using each sample.

[Figure 8] Figure 8 illustrates data obtained in an experiment for evaluating an effect of inhibiting cyst forming to potato roots through direct contact with eggs of an amino acid and an amino acid derivative substance used as the inactivating agent of one embodiment of the present invention, and illustrates an average number of cysts adhering to roots in using each sample.

Description of Embodiments

The details of the present invention will now be described. The present invention relates to an inactivating agent for inactivating eggs and J2s of cyst nematodes. Cyst nematodes to which the inactivating agent is applied is a kind of plant parasitic nematodes, lives in soil, and parasitizes a plant root to inhibit the growth. Since the cyst nematodes form cysts corresponding to durable forms in the life cycle as described above, if the infestation is once caused, extermination is difficult. The cyst nematodes in soil can be controlled by minimizing the number of cysts adhering to a plant.

Examples of the cyst nematodes that can be inactivated using the inactivating agent of the present invention may include a potato cyst nematode, a white potato cyst nematode, and a soybean cyst nematode.

For example, it is known that the potato cyst nematode and the white potato cyst nematode parasitizing potatoes are classified as the genus *Globodera,* and are similar in shape and ecological features. The host range of these cyst nematodes is comparatively narrow, and is limited to solanaceous plants, and a main crop seriously damaged is potatoes. Although resistant varieties counteracting the potato cyst nematode and the white potato cyst nematode are different from each other, methods and effects of conventional control measures, such as prevention of movement in soil, soil diagnosis before planting, refrainment of repeated cultivation of potatoes, and soil disinfection are common therebetween, and the application range of the inactivating agent of the present invention can also be considered to be similar therebetween.

A soybean cyst nematode (*Heterodera glycines*) is widely distributed in China, Russia, the Korean Peninsula, North and South America, and the like, and causes serious damage to soybean production in various places, and also in Japan, has continuously caused constant damage mainly in Hokkaido. The host range of the soybean cyst nematode is very narrow as compared with those of the root-knot nematode, the root-lesion nematode and the like, and considering field crops alone, crops experiencing significant increase in nematode density are substantially limited to soybeans, azuki beans, and green beans. As conventional control measures against the soybean cyst nematode, a chemical control method and a cultural control method are known. A drug used in the chemical control method is, however, expensive, and is difficult to use in cultivation of soybeans or azuki beans from the viewpoint of profitability, and is used only in cultivation of edamame, which is highly profitable. Besides, as the cultural control method, a countermeasure for reducing the density of nematodes by crop rotation or a trap crop, and a method for avoiding damage by a resistant variety are known. It is, however, difficult to control the density of the soybean cyst nematode.

Methods of soil disinfection, drug spraying and the like that are conventional countermeasures against the soybean cyst nematode, and effects thereof are common with the potato cyst nematode and the like, and they can also be considered to have the application range of the inactivating agent of the present invention.

The inactivating agent of the present invention contains, as an active ingredient, an amino acid, an aqueous solution of the amino acid, an amino acid derivative substance, an aqueous solution of the amino acid derivative substance, a mixture of an amino acid and an amino acid derivative substance, or an aqueous solution of the mixture.

The amino acid usable as the inactivating agent of the present invention is not limited as long as it is an amino acid from which a substance having a butyric acid's carbon skeleton $C_4H_8O_2$ is derived through the metabolism or degradation reaction thereof. Examples of such an amino acid include methionine: $C_5H_{11}NO_2S$, 2-hydroxy-4-methylthiobutyric acid: $C_4H_8O_3$, ethionine: $C_6H_{13}NO_2S$, threonine: $C_4H_9NO_3$, cystathionine: $C_7H_{14}N_2O_4S$, valine: $C_5H_{11}NO_2$, and phenylalanine: $C_9H_{11}NO_2$.

The form to be employed in using the amino acid as the inactivating agent is not especially limited, and if

5

necessary, the form of a powdered amino acid or an amino acid aqueous solution, for example, can be employed. As another form, one processed into a form of a jelly, a capsule, or a film can be used.

As the inactivating agent of the present invention, not only the amino acid itself but also a derivative substance of the amino acid can be used. The derivative substance of the amino acid usable as the inactivating agent is a substance having a butyric acid's carbon skeleton, and examples include 2-oxobutyric acid: $C_4H_6O_3$, 2-hydroxybutyric acid: $C_4H_8O_3$, 2-aminobutyric acid: $C_4H_9NO_2$, keto acid: $C_4H_6O_3$, ketoglutaric acid: $C_5H_6O_5$, acetoacetic acid: $C_4H_6O_3$, butyric acid: $C_4H_8O_2$, isobutyric acid: $C_4H_8O_2$, valeric acid: $C_5H_{10}C_2$, and isovaleric acid: $C_5H_{10}O_2$. A mixture of a plurality of substances respectively having a butyric acid's carbon skeleton can be also used as the inactivating agent of the present invention.

An amino acid derivative substance can be obtained as a result of a biochemical reaction of an amino acid under natural conditions of environment such as solid phase, liquid phase, or gas phase environment. For example, as the inactivating agent of the present invention, an aqueous solution after elapsed time can be used that is obtained by allowing an amino acid aqueous solution resulting from an amino acid mixed with water to stand still over a period of a prescribed days or more. It is known that when allowed to stand still in the form of an aqueous solution, an amino acid is unstabilized by influence of visible light and UV light, and the whole of or a part of the chemical structure is changed or degraded. For example, owing to influence of visible light, methionine is known to generate methional and ammonia through photosensitized degradation, deamination, and decarboxylation, and then generate methanethiol, and acrolein, and generate glyoxal from acrolein in some cases, and methionine sulfoxide and methionine sulfone are generated from methionine in other cases.

Alternatively, as the inactivating agent of the present invention, a reaction solution obtained by mixing an amino acid aqueous solution with microbe or microbial enzyme for accelerating the degradation of an amino acid can be used. When even a small amount of another substance or microbe such as bacteria is mixed in an aqueous solution of an amino acid, a derivative substance is generated through a chemical effect with another substance, or through degradation with the microbe. For example, methanethiol, ammonia, and oxobutyric acid can be derived from methionine with methionine γ lyase, cysteine and oxobutyric acid can be derived from cystathionine with cystathionine γ lyase, and ammonia, and organic acid having a butyric acid's carbon skeleton such as oxobutyric acid can be derived from threonine with dehydrogenase or deaminase. Alternatively, similar derivative substances can be obtained by causing an amino acid to act on bacterium having such enzymes.

The form in using an amino acid derivative substance as the inactivating agent is not especially limited, and if necessary, the amino acid derivative substance can be used in the form of a powder, or in the form of an aqueous solution, for example. As another form, one processed into a form of a jelly, a capsule, or a film can be used.

The inventors of the present application considered that not only a substance having a butyric acid's carbon skeleton but also another degradation product generated from an amino acid may enhance the effect of inactivating cyst nematodes in some cases, and it is presumed, based on the generation of methanethiol and ammonia, that the intensity of the inactivation effect is affected by synergy with such a degradation product.

When an amino acid, an aqueous solution of the amino acid, an amino acid derivative substance, an aqueous solution of the amino acid derivative substance, a mixture of an amino acid and an amino acid derivative substance, or an aqueous solution of the mixture is used as the inactivating agent, the concentration of the amino acid is preferably 1 ppm or more, and more preferably 5 ppm or more. Besides, there is no upper limit in the amino acid concentration from the viewpoint of inactivation of cyst nematodes, but from the viewpoint of preventing plant growth inhibition, the concentration is preferably 150 ppm or less, and more preferably 100 ppm or less. A temperature employed in using it as the inactivating agent is not limited as long as it is in a temperature range where usual biological reactions can be performed, and for example, is preferably about 10°C to 40°C.

The inactivating agent of the present invention can be singly used, and can be used together with another substance as an agricultural material for inactivating eggs and J2s of cyst nematodes. As another substance usable together, a soil amendment, an organic fertilizer, farmyard manure, a compost, a microbial material, a nutrient material and the like can be used. When the inactivating agent of the present invention is used simultaneously with another substance, for example, the inactivating agent can be precedently mixed with another substance to be used, another substance can be sprayed after applying the inactivating agent, or the inactivating agent can be applied after spraying another substance or the like. When the inactivating agent of the present invention is used together with such a substance, the effect of inactivating cyst nematodes can be induced under favorable influence given to the growth of a target plant, and further, microbes present in soil can be activated to enhance the effect of generating an amino acid derivative substance.

The inactivating agent of the present invention can be used for purpose of inactivating eggs and J2s within cysts (hereinafter simply referred to as inactivation of cysts). Examples of an amino acid effective for the inactivation of cysts include methionine, 2-hydroxy-4-methylthiobutyric acid, ethionine, cystathionine, and threonine. Besides, examples of an amino acid derivative substance effective for the inactivation of cysts include 2-oxobutyric acid, 2-hydroxybutyric acid, 2-aminobutyric acid, and chlorides thereof. Besides, mixtures of such amino acids and amino acid derivative substances, aqueous solutions of such amino acids or amino acid derivative substances, and aqueous solutions of the mixtures of such amino acids and amino acid derivative substances are also effective for the inactivation of cysts. Such amino acids and amino acid derivative substances effectively act on inhibition of the biological reaction of cysts in infested soil, and remarkably inhibit cysts adhesion to roots of a host crop. When such a substance is used as the inactivating agent for cysts, in order to prevent parasitism occurring after planting a host crop, it is preferable to mix the material in the form of an aqueous solution with a prescribed concentration or in the form of a powder with the infested soil before planting the crop.

As a method for contacting the inactivating agent of the present invention with eggs and J2s, for example, a method in which the inactivating agent is mixed in the soil or sprayed on the surface of soil either after planting or before planting can be employed. In this method, the inactivating agent is present in the soil where a plant is planted, and contacts with eggs and J2s in the soil.

The inactivating agent of the present invention can be used by a method through indirect contact with eggs and J2s. As an indirect contacting method, for example, a target plant is precedently caused to absorb the inactivating agent by culturing the target plant in (an aqueous solution of) the inactivating agent of the present invention, so that eggs and J2s can indirectly contact with the inactivating agent when the eggs and J2s contact with roots of the target plant having absorbed the inactivating agent.

Examples

Now, the present invention will be more specifically described with reference to Examples, and it is noted that the present invention is not limited to these Examples but can be practiced in various aspects as long as the problem can be solved.

First, preliminary experiments performed by the present inventors for purpose of evaluating direct influence of methionine on cyst nematodes, and results thereof will be described. Under comprehensive consideration of the results of these preliminary experiments and Non Patent Literature 5, the present inventors presume that an inactivating agent of the present invention selectively acts on eggs and J2s of cyst nematodes based on the above-described action mechanism.

[Preliminary Experiment 1: Evaluation of Direct Influence of Methionine on J2s]

(Experimental Method)

Nine diluted solutions of methionine (manufactured by Wako Pure Chemical Industries Ltd.) were prepared. Methionine concentrations (ppm) in the nine diluted solutions were respectively 0.8, 4, 6.25, 20, 62.5, 100, 500, 2500, and 10000. J2s of the potato cyst nematode were immersed in the diluted solutions of the respective concentrations. A time of the immersion treatment was 24 hours. Subsequently, the resultant J2s were washed with water for 2 hours, and thereafter, allowed to stand still for 22 hours. The resultant J2s were subjected to a filtration treatment over 24 hours by the Baermann technique, and the number of J2s having passed through the filter was counted as active individuals. It is noted that an experiment using distilled water or agrochemical (fosthiazate, manufactured by ISK BIOSCIENCES K.K.) instead of the methionine diluted solution was also performed as a control. Lethal concentrations corresponding to lethal rates of 50% and 90% ($LC_{50}$ and $LC_{90}$, respectively) were calculated to study influence of methionine on J2s and eggs of the potato cyst nematode.

(Results)

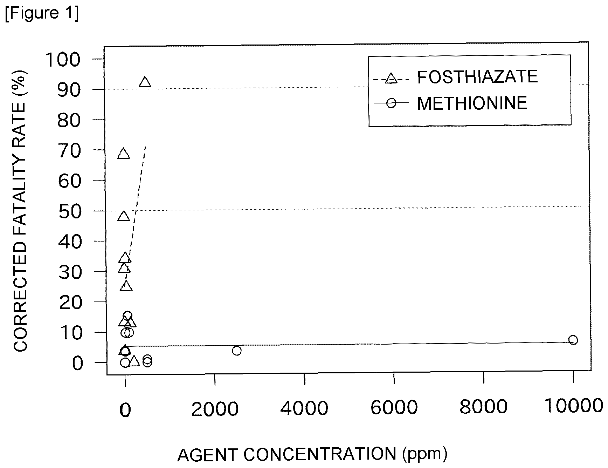

Figure 1 illustrates the results of the experiment. The abscissa of Figure 1 indicates the concentration (ppm) of each substance (methionine or agrochemical), and the ordinate indicates a corrected fatality rate (%). The corrected fatality rate was calculated in accordance with the following Abbott's correction formula based on a survival rate X obtained by using distilled water and a survival rate Y obtained by using each substance. It is noted that "corrected inactivation rate" and "corrected hatching inhibiting rate" used herein in the following description were similarly calculated in accordance with the following formula based on a survival rate X obtained by using a control and a survival rate Y obtained by using each sample.

```
        Corrected fatality rate, corrected inactivation

    rate, or corrected hatching inhibiting rate = (X - Y)/X
```

As illustrated in Figure 1, methionine was poor in the effect of killing J2s at all the concentrations, and the fatality rate was about 15% at most. On the contrary, the agrochemical was highly effective even at a low concentration. A half lethal concentration ($LC_{50}$) obtained by using methionine was an unrealistic value of about 28 million ppm (while the agrochemical showed $LC_{50}$ of 276 ppm, and $LC_{90}$ of 801 ppm). Accordingly, the direct influence of methionine on J2s of cyst nematodes is probably very small.

[Preliminary Experiment 2: Evaluation of Inhibition of Parasitization in Root and Cyst Formation by Methionine]

(Experimental Method)

150 g of infested soil infested with cysts of the potato cyst nematode (80 eggs/g of dry soil) was put in a 215 mL cup, and a bud portion cut from a Irish Cobbler was planted therein, followed by cultivation at room temperature for 30 days. The number of the potato cyst nematodes parasitic in roots, and the number of cysts adhering to the inner wall of the cup were examined in a case where methionine (manufactured by Wako Pure Chemical Industries Ltd.) was added to the infested soil simultaneously with planting the bud, and a case where it was not added. The methionine concentration was 500 ppm. The number of the potato cyst nematodes parasitic in the roots was checked by acid glycerin method. Specifically, the roots were stained by acid glycerin method, and the number of the potato cyst nematodes within the roots was microscopically confirmed. This experiment was repeated three times.

[Table 1]

| Treatment | Repeating Number | Within Roots | | | | Cysts on Cup Inner Wall |
|---|---|---|---|---|---|---|
| | | Second Stage Juvenile | Third-Fourth Stage Juvenile | Male Adult | Female Adult | |
| Untreated | 3 | 13.7+11.2 | 15.3+11.6 | 0.7±1.2 | 7.0±10.4 | 302.3±14.2 |
| Methionine | 3 | 2.0±2.0 | 0.7±0.6 | 0.0±0.0 | 0.0±0.0 | 4.7±1.5 |

*Numerical value: average ± standard deviation

(Results)

Table 1 shows observation results. When methionine was added to the soil, the number of juveniles in the roots and the number of cysts on the roots were both largely reduced as compared with the case where it was not added, and no adults were observed. Based on this result, it is understood that the addition of methionine in soil inhibits parasitization of juveniles in a root, and that a small number of juveniles parasitized minimally grow into adults. As a result, the adhesion of cysts was also inhibited. In consideration of the results of the preliminary experiment 1 and Non Patent Literature 5, it can be presumed that the results of this experiment are due to the effect, on the juveniles, of methionine having been taken into the bodies during action with stylets in entering the roots.

Example 1: Inactivation Effect of Methionine for Eggs and J2s

(Experimental Method)

In this Example, influence (inactivation effect) of methionine for eggs and J2s was confirmed. Sterile soil (20 g) in which a methionine concentration was adjusted using an aqueous solution of methionine (manufactured by Wako Pure Chemical Industries Ltd.) was put in a plastic zipper bag (unipack E-4; 140 x 100 x 0.04 mm), and eggs of the potato cyst nematode were inoculated therein, and the unipack was zipped and put in a closed container. The methionine concentration was adjusted to 25 ppm, 100 ppm, or 500 ppm. These samples were stored in an incubator for 7 days, and thereafter, a hatching agent containing Solanoeclepin A as a component was artificially added thereto. 7 days after the addition of the hatching agent, the resultant soil was applied to a Baermann funnel, and 10 days after the addition of the hatching agent, the separation was completed, and hatched J2s were collected. The number of the thus separated J2s was counted with a microscope, and based on the resultant number of J2s and the number of obtained eggs, a J2 collection rate and a corrected inactivation rate were calculated. In addition, in a part of the sample to which methionine was added, remaining J2s were separated from the soil resulting from the Baermann separation (referred to as Baermann residual soil) by a double layer centrifugal flotation method, and then observed with a microscope. It is noted that a sample with sterile soil containing distilled water instead of the methionine aqueous solution was used as a control.

Besides, a sample having no hatching agent added was also prepared for comparison.

(Results)

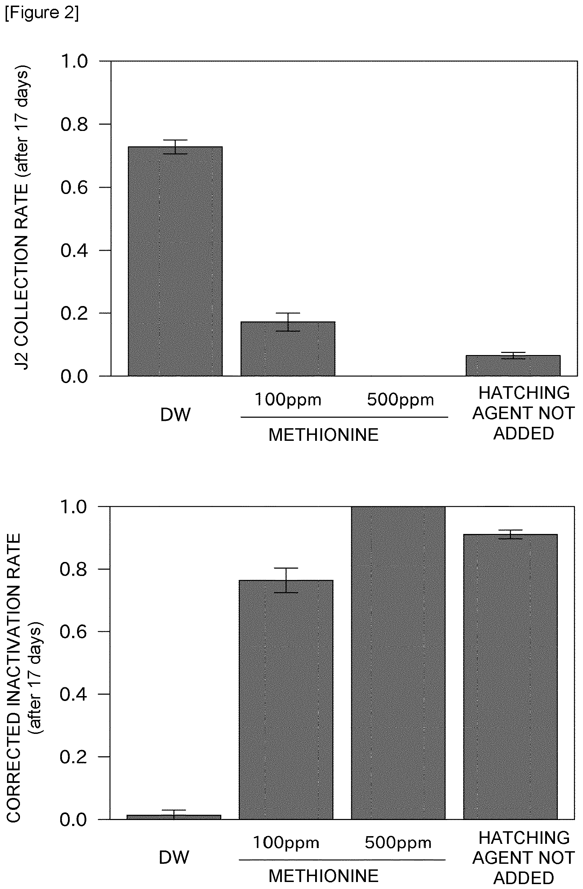

Figure 2 illustrates the J2 collection rate (upper graph) and the corrected inactivation rate (lower graph) of each sample obtained 17 days after the addition of the hatching agent. When the methionine concentration was 100 ppm, about 80% of eggs was confirmed to be inactivated, and when the methionine concentration was 500 ppm, 100% of eggs was confirmed to be inactivated. In the sample having the concentration of 500 ppm, no J2s were detected by the Baermann method, but $11 \pm 4$ J2s were detected in the soil.

Example 2: Hatching Response and Inactivation Effect on J2 in the Presence of Methionine

(Experimental Method)

In this Example, a state of generating the hatching response of eggs and the inactivation effect on hatched J2s obtained in the presence of methionine were confirmed. In a 10 mL lidded glass centrifuge tube, 0.9 mL of a solution of eggs of the potato cyst nematode, 1 mL of an aqueous solution of methionine (manufactured by Wako Pure Chemical Industries Ltd.) of a concentration of 100 ppm or 500 ppm, and 0.1 mL of a hatching agent containing Solanoeclepin A as a component were put to be mixed. Five samples were prepared for each methionine concentration. Each sample was allowed to stand still in an incubator (21°C) for 11 days, and the eggs and J2s in the centrifuge tube thereafter were observed and measured with a microscope. A sample using distilled water instead of the methionine aqueous solution was used as a control.

(Results)

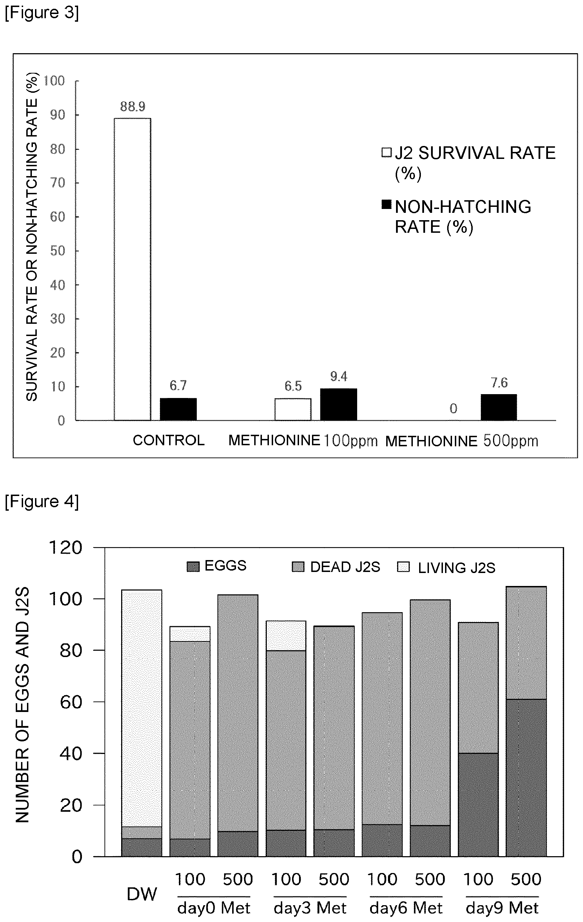

Figure 3 illustrates a non-hatching rate of eggs and a J2 survival rate of each sample. It was confirmed based on Figure 3 that although the hatching response is caused even in the presence of methionine, the J2 survival rate is remarkably lowered as compared with that of the control. Based on this result and the result of the preliminary experiment 1 that methionine does not directly affect J2s, it is presumed that methionine present around at the time of the hatching response affects hatched J2s to inactivate the J2s.

Example 3: Inactivation Effect of Methionine Derivative Substance for Eggs and J2s

(Implementation Method)

In this Example, an inactivation effect of a derivative substance, which is generated by allowing a methionine aqueous solution to stand still for a long period of time, for eggs and J2s was confirmed. 1 mL of an aqueous solution of methionine (manufactured by Wako Pure Chemical Industries Ltd.) was put in a centrifuge tube, and was allowed to stand still at 21°C for a prescribed number of days. As a methionine concentration of the methionine aqueous solution, two samples of 100 ppm and 500 ppm were prepared. The number of days of standing was 0 day, 3 days, 6 days, or 9 days. Five aqueous solution samples were prepared for each concentration and for each number of days of standing. With each of the thus prepared aqueous solutions, 0.9 mL of an aqueous solution in which 150 eggs of the potato cyst nematode were suspended, and 0.1 mL of a hatching agent containing Solanoeclepin A were mixed. 11 days after mixing the eggs and the hatching agent, a state of the eggs and J2s in each centrifuge tube was observed with a microscope. It is noted that a mixture of 0.9 mL of an aqueous solution containing 150 eggs of the potato cyst nematodes suspended in distilled water (DW) and a hatching agent was used as a control.

(Results)

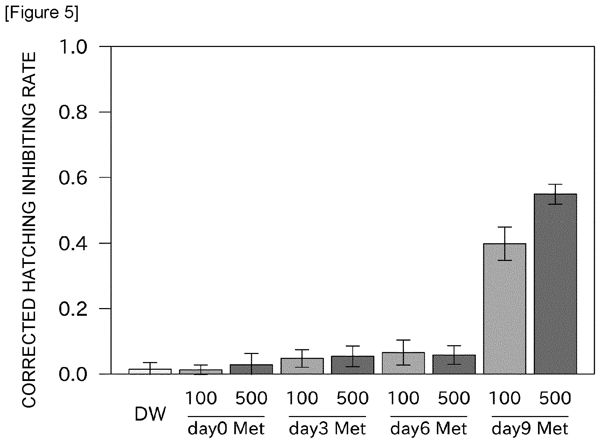

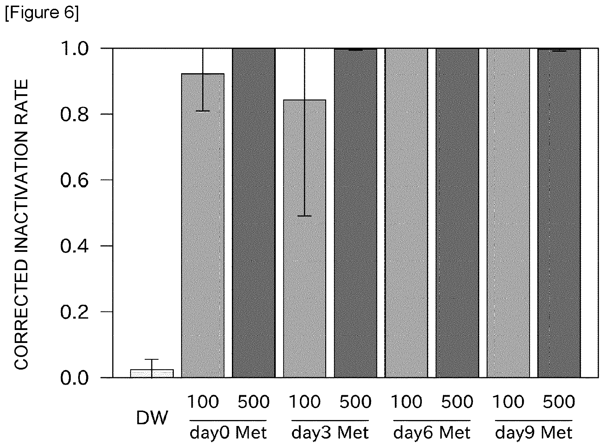

Figure 4 illustrates the number of eggs and J2s in each sample, Figure 5 illustrates a corrected hatching inhibiting rate, and Figure 6 illustrates a corrected inactivation rate. The abscissa of each graph indicates the methionine concentration (ppm) of the methionine aqueous solution and the number of days of standing ("day0 Met", "day3 Met", "day6 Met", and "day9 Met" respectively indicate the number of days of standing of 0 day, 3 days, 6 days, and 9 days).
Based on the results illustrated in Figures 4 and 5, the number of unhatched eggs was larger as the number of days of standing was larger and the concentration was higher, and hatched J2s were almost dead and living J2s were minimally observed in all the samples regardless of the number of days of standing. This reveals that the concentration of the methionine derivative substance in the aqueous solution was higher as the number of days of allowing the methionine aqueous solution to stand still was larger, and that the number of unhatched eggs were larger as the concentration of the derivative substance was higher. Besides, as the concentration of the derivative substance was higher, a larger number of unhatched eggs were observed, and therefore, it is presumed that the derivative substance has a hatching inhibition effect, or that the derivative substance lethally affects J2s in eggs before coming out of eggshells. It is noted that since the number of unhatched eggs was particularly large in the sample allowed to stand still for 9 days, the amount of the methionine derivative substance was larger as the number of days was larger, and such a derivative substance probably directly applies, to the eggs, influence of, for example, inactivating eggs before hatching.

Assuming that the number excluding those observed as living J2s after the addition of the hatching agent was regarded as the number of inactivated eggs, all of the samples to which methionine was added had high inactivation rates as illustrated in Figure 6. Besides, even if the unhatched eggs observed to be affected by the methionine aqueous solution of each number of days of standing were washed with distilled water, and the hatching agent was added thereto again, the hatching response was not normally observed as the methionine aqueous solution was allowed to stand still for a larger number of days. Accordingly, it is understood that the methionine derivative substance has the inactivation effect on eggs.

Example 4: Inactivation Effect of Methionine and Derivative Substance Thereof for Eggs

(Implementation Method)

In this Example, the inactivation effect on eggs of a degradation product generated by degrading methionine with methionine degrading enzyme (methionine derivative substance) was verified. First, an enzyme dissolved buffer (solution A), an enzyme solution (solution B), and a substrate solution (solution C) were prepared. The solution A was a buffer containing 100 mM potassium phosphate, 1 mM ethylenediaminetetraacetic acid, 0.01 vol% methyl mercaptoethanol, and 0.02 mM pyridoxal 5-phosphate monohydrate (PLP) buffer. The solution B was an enzyme solution obtained by adding 500 $\mu$g of L-methionine $\gamma$-lyase (MGL, manufactured by Bio Vision Incorporated) to 3 mL of the solution A. The solution C was a substrate solution containing an aqueous solution of L-methionine (Met) (manufactured by Wako Pure Chemical Industries Ltd.) at a concentration of 1000 ppm, and 0.02 mM pyridoxal 5-phosphate monohydrate.

A sample was prepared by putting 1 mL of the solution C in a centrifuge tube, adding thereto 1 mL of an egg solution to contain about 200 eggs of the potato cyst nematode, adding thereto 60 $\mu$L of the solution B, and further adding thereto 0.1 mL of a hatching agent containing Solanoeclepin A as a component (PRD). The thus prepared sample was referred to as "Met+MGL+PRD". Next, a sample was prepared by putting 0.94 mL of the solution C in a centrifuge tube, adding, to the centrifuge tube, 0.9 mL of an egg solution to contain about 200 eggs of the potato cyst nematode, adding thereto 60 $\mu$L of the solution A, and further adding thereto 0.1 mL of the hatching agent (PRD). This sample was referred to as "Met+PRD". Besides, a sample was prepared by adding, to distilled water (DW), 0.9 mL of an egg solution to contain about 200 eggs of the potato cyst nematode, and adding thereto 0.1 mL of the hatching agent (PRD). This sample was referred to as "DW+PRD". 10 samples were prepared for each type of the samples. It is noted that a sample obtained by adding, to distilled water (DW), 0.9 mL of an egg solution to contain about 200 eggs of the potato cyst nematode was used as a control. Each centrifuge tube was cultured in an incubator set to 21°C for 10 days, and a half amount of each sample was subjected to microscopic observation. The rest of the sample was replaced with distilled water, the hatching agent (PRD) was added thereto again, and the resultant was cultured under the same conditions for another 9 days (which corresponds to "9 Days after Washing" in Table 2). Thus, unhatched eggs and inactivated eggs can be distinguished.

[Table 2]

|  | Egg | | Living J2 | | Dead J2 | |
| --- | --- | --- | --- | --- | --- | --- |
|  | After 10 days | 9 days after washing | After 10 days | 9 days after washing | After 10 days | 9 days after washing |
| Met+MGL+PRD | 93.7 | 95.8 | 0.0 | 0.0 | 6.3 | 4.2 |
| Met+PRD | 90.4 | 90.2 | 0.0 | 0.0 | 9.6 | 9.8 |
| DW+PRD | 36.0 | 20.5 | 63.0 | 79.3 | 1.0 | 0.2 |
| DW | 91.3 | 19.1 | 6.8 | 80.4 | 1.9 | 0.5 |

(%)

(Results)

Table 2 shows proportions of eggs, living J2s, and dead J2s for each type of samples which were observed after culturing for 10 days, as well as after culturing for 9 days after washing. It is understood from Table 2 that living J2s were not observed and both eggs and J2s were inactivated also in the sample in which methionine had been precedently optionally degraded with the methionine degrading enzyme MGL (Met+MGL+PRD) similarly to that in methionine (Met+PRD). Besides, a larger number of unhatched eggs were observed in the sample having been degraded with the methionine degrading enzyme MGL than in the sample containing methionine alone, and these unhatched eggs were not normally hatched even after the washing, and hence were probably inactivated eggs. On the other hand, it was confirmed that eggs were normally hatched in the control (DW+PRD), and in the sample containing distilled water alone (DW), eggs were normally hatched by adding the hatching agent after the washing, and living J2s were observed therein.

It is understood based on these results that the methionine derivative substance also has the inactivation effect on eggs to a similar extent to methionine. Since the effect is not lowered even if methionine is degraded, the principal factor for causing the inactivation for eggs is probably not methionine itself but the methionine derivative substance is generated through methionine taken into eggs or through degradation action occurring around the eggs, and the derivative substance probably affects the eggs and J2s. It is noted that even when a similar test was performed with the methionine degrading enzyme MGL precedently added to a methionine aqueous solution 3 days ago to degrade methionine, similar results as those of this Example were obtained.

Example 5: Inactivation Effect of Methionine Derivative Substance for Eggs

(Implementation Method)

In Example 4, the inactivation effect on eggs of methionine and the derivative substance thereof was confirmed by putting eggs in the aqueous solution where degradation of methionine was progressing. In this experiment, however, the degradation of methionine and the hatching response of eggs occurred simultaneously in the system, and hence there was a possibility that methionine itself present in the system might affect the hatching response. Therefore, in Example 5, methionine was degraded with the methionine degrading enzyme MGL precedently before starting the hatching response, and in a system where a large amount of the methionine derivative substance was thus present, the inactivation effect on eggs was confirmed. In Example 5, the solution A, the solution B, and the solution C the same as those of Example 4 were prepared and used.

0.94 mL of the solution C was put in a centrifuge tube, 60 $\mu$L of the solution B was added to the centrifuge tube, and the resultant was allowed to stand still in an incubator set to 21°C for 3 days to degrade substantially whole methionine. Thereafter, 0.9 mL of an egg solution containing about 150 eggs of the potato cyst nematode was put in the centrifuge tube, and 0.1 mL of a hatching agent containing Solanoeclepin as a component (PRD) was added thereto to prepare a sample. This sample was referred to as "Met+MGL+PRD". Next, 0.94 mL of the solution C was put in a centrifuge tube, 0.9 mL of an egg solution containing about 150 eggs of the potato cyst nematode was put in the centrifuge tube, 60 $\mu$L of the solution A was added thereto, and 0.1 mL of Solanoeclepin was further added as the hatching agent PRD to prepare a sample. This sample was referred to as the sample "Met+PRD". Besides, 0.9 mL of an egg solution containing about 150 eggs of the potato cyst nematode was added to distilled water (DW), and 0.1 mL of a hatching agent containing Solanoeclepin as a component (PRD) was further added thereto to prepare a sample. This sample was referred to as the sample "DW+PRD". 10 samples were prepared for each type of the samples. It is noted that a sample obtained by adding 0.9 mL of an egg solution containing about 150 eggs to distilled water (DW) was used as a control. In this experiment, the activity of PRD used at first was low, and hence the same amount of PRD was added again after 7 days, and 7 days after the addition, a state of eggs in each centrifuge tube was observed with a microscope.

[Table 3]

| | Number of Individuals in Centrifuge Tube | | | Inactivation Rate |
|---|---|---|---|---|
| | Egg | Living J2 | Dead J2 | |
| Met+MGL+PRD | 94% | 0% | 6% | 100% |
| Met+PRD | 79% | 1% | 20% | 99% |
| DW+PRD | 13% | 86% | 0% | 1% |
| Only DW | 92% | 5% | 2% | - |

(Results)

Table 3 shows proportions of eggs, living J2s, and dead J2s, and the inactivation rate for eggs observed in each sample. The inactivation rate was obtained in the same manner as the corrected hatching rate obtained in Figure 6. It is noted that unhatched eggs in the sample containing distilled water alone (DW) could be determined as normal eggs before hatching in consideration of the result of the sample in which the hatching agent was added to distilled water (DW+PRD) and the results of Example 4, and therefore, the inactivation rate was not calculated.

The results of Table 3 show similar trend to that shown in Table 2, and the inactivation rate for eggs in the sample that was presumed to contain substantially only the derivative substance because methionine had been degraded (Met+MGL+PRD) was 100%. It is understood from this result that the derivative substance generated through the degradation of methionine is involved in inactivation of eggs. Besides, in the sample in which methionine had probably not been degraded (Met+PRD), the number of unhatched eggs was smaller than in the sample containing substantially only the derivative substance (Met+MGL+PRD), and therefore, it is understood that eggs and J2s within the eggs can be affected at an earlier stage in the life cycle of cyst nematodes when methionine is precedently degraded.

Example 6: Inactivation Effect on Eggs of Amino Acid excluding Methionine

(Implementation Method)

Eleven amino acids shown in Table 4 were verified for the inactivation effect on eggs. 1 mL of an aqueous solution of each amino acid was put in a centrifuge tube, and the resultant was allowed to stand still at 21°C for a prescribed number of days. The concentration of each amino acid aqueous solution was 500 ppm. 5 samples were prepared for each type of samples. Each of the thus prepared aqueous solutions was mixed with 0.9 mL of an aqueous solution in which 100 eggs of the potato cyst nematode were suspended, and 0.1 mL of a hatching agent for hatching the eggs. As the hatching agent, a hydroponic solution of potato collected in Hokkaido Chuo Nojo (Hokkaido Central Farm) of National Center for Seeds and Seedlings, National Agriculture and Food Research Organization was used. After mixing the eggs and the hatching agent, the resultant was allowed to stand still in a dark place at 21°C, and a state of the eggs within each centrifuge tube after 14 days was observed with a microscope.

[Table 4]

| Effect Intensity | No. | Experimental Conditions | Corrected Inactivation Rate | Corrected Hatching Inhibiting Rate |
|---|---|---|---|---|
| High | 1 | L-methionine+PRD | 96% | 48% |
| | 2 | L-2-hydroxy-4-methylthiobutyric acid+PRD | 95% | 3% |
| | 3 | L-cystathionine+PRD | 89% | 3% |
| | 4 | DL-ethionine+PRD | 100% | 0% |
| | 5 | L-threonine+PRD | 100% | 0% |
| Middle | 6 | L-alanine+PRD | 59% | 51% |
| | 7 | L-valine+PRD | 74% | 68% |
| | 8 | L-phenylalanine+PRD | 66% | 64% |
| Low | 9 | L-cysteine+PRD | 27% | 19% |
| | 10 | DL-homocysteine+PRD | 18% | 19% |
| | 11 | Taurine+PRD | 31% | 28% |

(Results)

Table 4 shows the corrected inactivation rates and the corrected hatching inhibiting rates, and the intensities of the inactivation effect on eggs obtained in the samples of the eleven amino acids. The hatching inhibiting rate and the inactivation rate were obtained in the same manner as in Example 3. It is noted that moribund juvenile weakened by the addition of the agent were counted as dead J2s.

It is understood from Table 4 that the inactivation rate and the hatching inhibiting rate vary depending on the type of amino acid. L-methionine, L-2-hydroxy-4-methylthiobutyric acid, L-cystathionine, DL-ethionine, and L-threonine were amino acids having a high inactivation effect on eggs. It is noted that the effect of DL-ethionine was induced 1 week later than those of the other amino acids, and the inactivation rate at that time is shown. The inactivation effect on eggs of L-alanine, L-valine, and L-phenylalanine was at a middle level. The inactivation effect on eggs of L-cysteine, L-homocysteine, and taurine was at a low level.

Based on these results, it is understood that an amino acid from which a derivative substance having a butyric acid's carbon skeleton such as oxobutyric acid is generated has a high inactivation effect on eggs.

Example 7: Inactivation Effect by Indirect Contact of Methionine

An effect obtained by indirectly contacting the inactivating agent of the present invention with eggs and J2s was verified. Specifically, a potato bud was precedently cultured in a methionine aqueous solution, and was replanted and cultivated together with a bud having been cultured in a methionine-free aqueous solution in soil infested with the potato cyst nematode, and thus, it was verified whether or not there was a control effect by the methionine having been absorbed in a root.

(Experimental Method)

Each of six 215 mL clear cups was filled to about half with Ceramis (artificial culture soil) manufactured by Mars GmbH, and a bud of a Irish Cobbler having been cut into a circle was inserted therein. A liquid fertilizer (amino acid-free) was uniformly applied thereto, and the resultant was cultured for 6 days in an incubator with light shielded. When roots were started to grow, an aqueous solution of methionine (manufactured by Wako Pure Chemical Industries Ltd.) (100 mg/200 g (cup weight)) was added to three of the six samples to be absorbed by the Irish Cobbler. After culturing these for another 6 days, the potato roots were washed with tap water, the resultants were replaced with water for about 2 hours, and then replanted in infested soil. Thereafter, the resultants were cultured for 50 days, and it was observed whether or not cysts were adhered in the 3 controls and the 3 samples having methionine absorbed.

(Results)

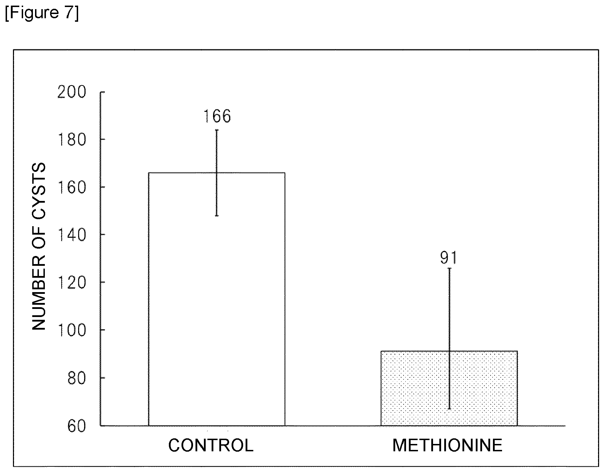

Figure 7 illustrates the numbers of cysts adhering to the roots in the respective samples. When methionine was precedently absorbed in the roots of a Irish Cobbler, the number of cysts on the roots was reduced by about 45%. This reveals that part of methionine precedently absorbed in the roots inactivated J2s. Considering Non Patent Literature 5, the action mechanism is probably that when J2s thrust stylets in entering the roots, methionine was taken in the bodies at this point, and as a result, the J2s were inactivated. The number of cysts on roots in the sample using methionine was reduced only by about a half as compared with that in the control probably because the methionine concentration in the roots was reduced in proportion to the time period when the methionine was retained in the roots.

Example 8: Effect of Inhibiting Cyst Forming by Amino Acid and Amino Acid Derivative Substance

The amino acids and the amino acid derivative substances having been found to have the inactivation effect on eggs and J2s as a result of the above-described Examples were confirmed for an effect of inhibiting cyst forming by directly contacting these substances with eggs. More specifically, eggs were put in an aqueous solution of each of these substances to precedently directly contact each substance with the eggs, a hatching agent was added thereto to hatch the eggs, and the resultant aqueous solution was used in a cup test using culture soil and potato to evaluate cyst forming ability.

(Experimental Method)

In this experiment, methionine, 2-hydroxy-4-methylthiobutyric acid, and threonine were used as the amino acid, and oxobutyric acid, sodium oxobutyrate, and sodium hydroxybutyrate were used as the amino acid derivative substance. It is noted that sodium hydroxybutyrate was used for purpose of confirming the effect as a substance similar to hydroxybutyric acid. 1 mL of an aqueous solution adjusted to have a concentration of 500 ppm was put in a centrifuge tube to be mixed with 0.9 mL of an aqueous solution in which 2000 eggs of the potato cyst nematode were suspended, and a hatching agent for hatching the eggs. As the hatching agent, 0.1 mL of Solanoeclepin A was used. After mixing the eggs and the hatching agent, the resultant was allowed to stand still at 21°C for 3 weeks, and thereafter, the entire amount of the resultant was poured into a cup holding culture soil and a seed potato, and the resultant was cultivated at 21°C in a dark place for about 3 months to observe a state of cysts adhering to roots of the potato. It is noted that a sample obtained by mixing 0.9 mL of an aqueous solution in which eggs of the potato cyst nematode were suspended with distilled water (DW) was used as a control.

(Results)

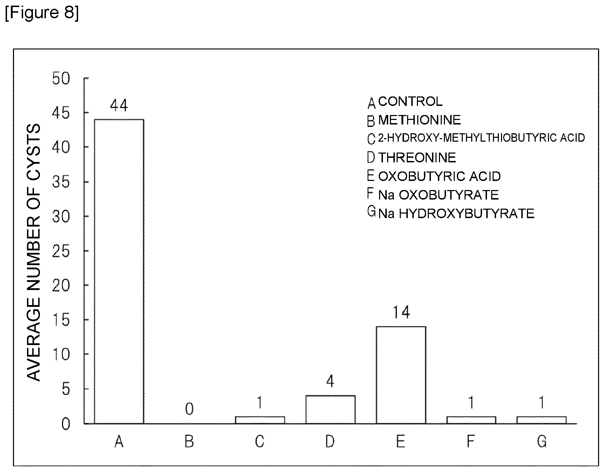

Figure 8 illustrates an average number of cysts on the roots in each sample. It was confirmed, in all the samples excluding the sample D (aminobutyric acid), that the cyst was inhibited as compared with that in the control. Based on this result, it can be determined that all the substances used in the experiment have the effect of inhibiting cyst forming to potato roots.

**Claims**

1. An inactivating agent for inactivating eggs and second stage juveniles of cyst nematodes, comprising one or both of an amino acid and an amino acid derivative substance, or an aqueous solution thereof.

2. The inactivating agent according to claim 1,
   wherein the amino acid is at least one selected from the group consisting of methionine, 2-hydroxy-4-methylthiobutyric acid, ethionine, cystathionine, threonine, valine, and phenylalanine.

3. The inactivating agent according to claim 1 or 2, wherein the amino acid derivative substance is a substance having a butyric acid's carbon skeleton.

4. The inactivating agent according to claim 3,
   wherein the amino acid derivative substance is at least one selected from the group consisting of 2-oxobutyric acid, 2-hydroxybutyric acid, 2-aminobutyric acid, keto acid, ketoglutaric acid, acetoacetic acid, butyric acid, isobutyric acid, valeric acid, and isovaleric acid.

5. The inactivating agent according to any one of claims 1 to 4,
   wherein the cyst nematodes is at least one selected from the group consisting of potato cyst nematode, white potato cyst nematode, and soybean cyst nematode.

6. The inactivating agent according to any one of claims 1 to 5, comprising one or both of the amino acid and the amino acid derivative substance in a concentration of at least 5 ppm or more.

7. An inactivation agricultural material for inactivating eggs and second stage juveniles of cyst nematodes, comprising the inactivating agent according to any one of claims 1 to 6.

8. An inactivation method for eggs and second stage juveniles, comprising a step of contacting the inactivating agent according to any one of claims 1 to 6 with eggs and/or second stage juveniles of cyst nematodes.

9. The inactivation method according to claim 8,
   wherein the step of contacting the inactivating agent with eggs and/or second stage juveniles of cyst nematodes includes:
   a step of contacting the inactivating agent with the eggs and/or the second stage juveniles by causing the inactivating agent to be present in soil.

10. The inactivation method according to claim 8,
    wherein the step of contacting the inactivating agent with eggs and/or second stage juveniles of cyst nematodes includes:
    a step of causing a target plant to absorb the inactivating agent, and contacting a root of the target plant having absorbed the inactivating agent with the second stage juveniles.

[Figure 1]

[Figure 2]

[Figure 3]

[Figure 4]

[Figure 5]

[Figure 6]

[Figure 7]

[Figure 8]

## INTERNATIONAL SEARCH REPORT

| International application No. |
| --- |
| **PCT/JP2022/003410** |

### A. CLASSIFICATION OF SUBJECT MATTER

*A01N 37/44*(2006.01)i; *A01N 25/00*(2006.01)i; *A01N 25/02*(2006.01)i; *A01N 37/02*(2006.01)i; *A01P 5/00*(2006.01)i
FI: A01N37/44; A01N25/00 102; A01N25/02; A01N37/02; A01P5/00

According to International Patent Classification (IPC) or to both national classification and IPC

### B. FIELDS SEARCHED

Minimum documentation searched (classification system followed by classification symbols)

A01N37/44; A01N25/00; A01N25/02; A01N37/02; A01P5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/004252 A1 (CITIC CO LTD) 03 January 2019 (2019-01-03)<br>      claims, examples 1, 5 | 1-10 |
| A | WU, Haiyan et al. Effect of Myrothecium verrucaria ZW-2 fermentation filtrates on various plant-parasitic nematodes. Journal of Plant Diseases and Protection. 2020, vol. 127, no. 4, pp. 545-552<br>      materials and methods, fig. 1, 2 | 1-10 |
| A | EVANS, K. et al. Effect of amino acids on the reproduction of Heterodera rostochiensis. Nematologica. 1971, vol. 17, pp. 495-500<br>      materials and methods, table I | 1-10 |
| A | TRUDGILL, D. L. The effect of environment on sex determination in Heterodera rostochiensis. Nematologica. 1967, vol. 13, pp. 263-272<br>      materials and methods | 1-10 |
| A | MAYER, Anke et al. In-vitro and in-vivo nematicidal activities of the cyclic dodecapeptide omphalotin A. Peptide Science. 1999, vol. 55, pp. 27-30<br>      2.1.2 Other nematodes, table 1 | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 March 2022** | **05 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/003410** |

## C. DOCUMENTS CONSIDERED TO BE RELEVANT

| Category* | Citation of document, with indication, where appropriate, of the relevant passages | Relevant to claim No. |
| --- | --- | --- |
| A | JP 2000-502250 A (BAYER AKTIENGESELLSCHAFT) 29 February 2000 (2000-02-29) claims, examples | 1-10 |

Form PCT/ISA/210 (second sheet) (January 2015)

**INTERNATIONAL SEARCH REPORT**
Information on patent family members

International application No.

**PCT/JP2022/003410**

| Patent document cited in search report | | | Publication date (day/month/year) | Patent family member(s) | | | Publication date (day/month/year) |
|---|---|---|---|---|---|---|---|
| WO | 2019/004252 | A1 | 03 January 2019 | (Family: none) | | | |
| JP | 2000-502250 | A | 29 February 2000 | US | 2001/0008634 | A1 | |
| | | | | claims, examples | | | |
| | | | | WO | 1997/020857 | A1 | |
| | | | | EP | 865447 | A | |
| | | | | DE | 19545463 | A | |
| | | | | AU | 7628296 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000007506 A
- JP 3557454 B
- JP 4670254 B
- WO 2019004252 A

**Non-patent literature cited in the description**

- **MINAGAWA et al.** Soil Application Effect of Methionine on the Root-Knot and Soil Nematode Densities, and Tomato Nursery Growth. *Bulletin of the National Agricultural Research Center,* January 2004, vol. 4, 35-40
- **K. EVANS ; D. L. TRUDGILL.** EFFECTS OF AN AMINO ACIDS ON THE REPRODUCTION OF HETERODERA ROSTOCHIENSIS. *Nematologica,* 1971, vol. 17, 495-500
- **D. L. TRUDGILL.** THE EFFECT OF ENVIRONMENT ON SEX DETERMINATION IN HETERODERA ROSTOCHIENSIS. *Nematologica,* 1967, vol. 13, 263-272
- **D. L. TRUDGILL ; J. M. WEBSTER ; D. M. PARROTT.** THE EFFECT OF RESISTANT SOLANACEOUS PLANTS ON THE SEX RATIO OF HETERODERA ROSTOCHIENSIS AND THE USE OF THE SEX RATIO TO ASSESS THE FREQUENCY AND GENETIC CONSTITUTION OF PATHOTYPES. *ANN. APPL. BIOL,* 1967, vol. 60, 421-428
- Potato Cyst Nematodes: Biology, Distribution and Control. 1998, 27-43